# FASCICULE DE BREVET EUROPEEN

(11) **EP 3 649 690 B1**
(45) Date de publication et mention de la délivrance du brevet: **28.12.2022**
(21) Numéro de dépôt: 18748998.4
(22) Date de dépôt: 25.06.2018
(51) Int. Cl.: H01M 4/1391, H01M 4/04, H01M 10/058, H01M 10/0525, H01M 4/36, H01M 4/1395, H01M 4/1393, H01M 4/62

(54) **PROCEDE DE FABRICATION D'UN ACCUMULATEUR DU TYPE LITHIUM-ION**
VERFAHREN ZUM BETREIBEN EINER LITHIUM-IONEN-BATTERIE
METHOD FOR MANUFACTURING A LITHIUM-ION BATTERY

(30) Priorité: 07.07.2017 FR 1756411
(43) Date de publication de la demande: 13.05.2020
(73) Titulaire: Renault s.a.s, 92100 Boulogne Billancourt (FR)
(72) Inventeur: SANNIER, Lucas, 25800 Vernouillet (FR); CHAKIR, Mohamed, 91180 Saint Germain Les Arpajon (FR); WILMS, Yoan, 33800 Bordeaux (FR); COURBARON, Gwenaëlle, 33820 Braud Et Saint Louis (FR); ITO, Atsushi, Yokohama-shi Kanagawa 221-0023 (JP)
(74) Mandataire: Renault Group
(86) Numéro de dépôt international: PCT/FR2018/051541
(87) Numéro de publication internationale: WO 2019/008249

(56) Documents cités:
- WO-A1-2011/157958
- WO-A1-2017/067996

## Description

### DOMAINE TECHNIQUE

La présente invention a trait à un procédé de fabrication d'un accumulateur du type lithium-ion

L'invention constitue un perfectionnement du procédé faisant l'objet de la demande de brevet français numéro FR 3 042 914 A1. Elle vise sensiblement à résoudre la même problématique de perte irréversible de capacité durant le premier cycle de charge de l'accumulateur. Mais elle fournit de meilleures performances, c'est-à-dire qu'elle permet de limiter encore plus cette perte de capacité. En effet, lors du premier cycle de charge de l'accumulateur, quand le matériau actif de l'électrode négative est porté à un potentiel d'insertion du lithium, une partie du lithium va réagir avec l'électrolyte à la surface des grains de matériau actif de l'électrode négative pour former une couche de passivation à sa surface. La formation de cette couche de passivation consomme une quantité d'ions lithium non négligeable, ce qui se matérialise par une perte irréversible de capacité de l'accumulateur (cette perte étant qualifiée de capacité irréversible et pouvant être évaluée de l'ordre de 5 à 20% de la capacité initiale de l'électrode positive), du fait que les ions lithium ayant réagi ne sont plus disponibles pour les cycles ultérieurs de charge/décharge.

Il convient donc de minimiser, au maximum, cette perte lors de la première charge, afin que la densité d'énergie de l'accumulateur soit la plus élevée possible.

Pour se faire, il a été proposé, dans l'art antérieur, deux types de techniques pour pallier l'inconvénient susmentionné :
- des techniques de prélithiation de l'électrode négative, assez éloignées de la présente invention ; et
- des techniques de surlithiation de l'électrode positive.

Les techniques de surlithiation de l'électrode positive selon l'art antérieur proposent d'ajouter, dans la composition comprenant les ingrédients constitutifs de l'électrode positive, un sel sacrificiel qui, lors de la première charge, va se décomposer et fournir la quantité nécessaire de Li pour former la couche de passivation à la surface de l'électrode négative.

Dans ces techniques, il est à noter que le sel sacrificiel doit pouvoir se décomposer à un potentiel situé dans la fenêtre de potentiel que balaie l'électrode positive lors de la première charge.

Aussi, lorsque la première charge a lieu, deux réactions électrochimiques simultanées génèrent des ions Li⁺, qui sont la désinsertion de lithium de l'électrode positive et la décomposition du sel sacrificiel. Lors de la décomposition du sel sacrificiel, il se forme notamment des sous-produits gazeux, qui seront évacués à l'issue de l'étape de charge. En effet, on évite ainsi d'alourdir inutilement l'accumulateur par ces sous-produits, qui, en outre, pourraient gêner le fonctionnement électrochimique ultérieur de la cellule.

Ces techniques sont notamment décrites dans la demande de brevet FR 2 961 634 et son extension internationale WO 2011/157958, citées dans la demande de base FR 3 042 914 et dans son rapport de recherche respectivement, qui précisent que le sel sacrificiel est introduit directement dans l'encre comprenant les ingrédients de l'électrode positive, à savoir le matériau actif, le conducteur électronique, le liant organique, l'encre étant ensuite déposée sur un substrat collecteur de courant pour former l'électrode positive, moyennant quoi le sel sacrificiel se trouve réparti, de manière aléatoire, dans l'électrode positive.

Ces techniques présentent un certain nombre d'inconvénients, car la décomposition du sel sacrificiel peut engendrer plusieurs phénomènes :
- l'apparition de volumes morts au cœur de l'électrode, en raison de la décomposition du sel, ce qui contribue à l'augmentation de la porosité de l'électrode ; et
- la déconnexion électronique de certaines parties de l'électrode rendant le matériau actif inutilisable et induisant, ainsi, une perte de capacité de l'accumulateur.

Aussi, au vu de ce qui précède, la déposante s'est fixé pour objectif de mettre au point un procédé de fabrication d'un accumulateur de type lithium-ion permettant de surmonter les inconvénients susmentionnés et permettant, en particulier, d'augmenter la capacité de l'accumulateur lithium-ion et donc sa densité d'énergie et également la cyclabilité de l'accumulateur.

Ainsi, la déposante a déposé la première demande de brevet français numéro FR 3 042 914 A1, qui décrit et revendique un procédé de fabrication d'un accumulateur du type lithium-ion incluant notamment une étape de dépôt à la surface de l'électrode positive d'un sel de lithium, ainsi qu'une étape de formation d'une couche de passivation à la surface de l'électrode négative avec les ions lithium issus de la décomposition du sel de lithium par application d'une première charge à l'assemblage susmentionné. Le procédé selon FR 3 042 914 A1 fournit déjà des performances respectables, toutefois la présente invention a pour objectif de l'améliorer, en limitant encore plus la perte irréversible de capacité durant le premier cycle de charge.

A cet effet, l'invention propose notamment de déposer un film de prélithiation à la surface de l'électrode positive, permettant de mieux ajuster la quantité de lithium à apporter à la cellule, comparé à un procédé de dépôt par pulvérisation par exemple. Dans le cas d'un film enduit directement sur l'électrode, le solvant utilisé pour former le film peut être différent de celui utilisé pour réaliser l'électrode positive, ce qui permet avantageusement de ne pas modifier la porosité de l'électrode. Le film peut aussi avantageusement contenir un plastifiant pour créer une porosité dans le film. Enfin, l'invention propose l'utilisation d'autres liants polymériques pour constituer les électrodes positive et négative.

### EXPOSE DE L'INVENTION

Ainsi, l'invention a trait à un procédé préparation d'un accumulateur lithium-ion comprenant une électrode positive et une électrode négative disposées de part et d'autre d'un électrolyte, ladite électrode positive comprenant, comme matériau actif, un matériau à base de lithium, ledit procédé comprenant les étapes suivantes :
a) une étape de dépôt à la surface de l'électrode positive, avant placement dans l'accumulateur, d'un film contenant un sel de lithium ;
b) une étape d'assemblage de l'électrode positive, de l'électrode négative et de l'électrolyte ; et
c) une étape de formation d'une couche de passivation à la surface de l'électrode négative avec les ions lithium issus de la décomposition du sel de lithium contenu dans le film par application d'une première charge à l'assemblage susmentionné.

En d'autres termes, la première charge est appliquée dans des conditions de potentiel nécessaires pour la décomposition du sel de lithium, cette décomposition se traduisant par une libération d'ions lithium, qui vont contribuer à la formation de la couche de passivation à la surface de l'électrode négative. Du fait que le sel de lithium fournit les ions lithium nécessaires à la formation de la couche de passivation, on peut ainsi qualifier ce sel de « sel sacrificiel ».

Aussi, les ions lithium nécessaires pour la formation de la couche de passivation ne sont pas issus du matériau actif de l'électrode positive. Les ions lithium du matériau actif de l'électrode positive ne sont donc pas perdus pour la formation de cette couche lors de la première charge et donc la perte de capacité de l'accumulateur s'en trouve amoindrie voire nulle.

Enfin, le fait d'appliquer un sel de lithium sous forme de film à la surface de l'électrode positive contrairement à l'art antérieur, où le sel de lithium est ajouté à la composition précurseur de l'électrode positive, remplit un certain nombre d'avantages.

D'une part, le fait de passer par une étape de formation d'un film permet de ne pas déposer ou projeter une solution à la surface de l'électrode positive. Selon un mode par projection, le solvant utilisé peut modifier la porosité de surface de l'électrode et altérer les performances de la batterie. D'autre part, à l'issue de la première charge, le film comprenant le sel de lithium s'est complètement décomposé pour donner les ions Li⁺ nécessaires à la formation de la couche de passivation sur l'électrode négative, sans que cela ne désorganise la structure interne de l'électrode positive, celle-ci, à l'issue de la première charge, présentant une organisation structurale similaire à celle d'une électrode classique, notamment sans qu'il n'y ait apparition de volume mort et de perte de matériau actif. Le sel de lithium se trouvant sous forme de film à la surface de l'électrode, il n'y a pas de modification de la porosité intrinsèque de l'électrode.

D'autre part, contrairement aux modes de réalisation de l'art antérieur, où le sel sacrificiel est introduit directement dans la composition précurseur de l'électrode positive et où il est nécessaire d'inclure une quantité de sel supérieure à celle nécessaire à la formation de la couche de passivation du fait de l'impossibilité de maîtriser le placement des grains de sel dans la structure de l'électrode, le procédé de l'invention donne la possibilité d'utiliser, du fait de la localisation du sel de lithium juste à la surface de l'électrode positive sous forme de film, uniquement la quantité suffisante à la formation de la couche de passivation sur l'électrode négative. Dans ce cas, il n'y a donc pas de sel excédentaire dans l'électrode positive après formation de la couche de passivation et donc de matière inutile dans celle-ci.

Comme mentionné ci-dessus, le procédé de l'invention comporte donc une étape de traitement de l'électrode positive, avant placement dans un assemblage comprenant l'électrode négative et l'électrolyte, ce traitement consistant à déposer sur l'électrode positive (avantageusement, au moins sur la face destinée à être en contact avec l'électrolyte) un film de prélithiation à base d'un sel de lithium, lequel est destiné à participer à la formation de la couche de passivation lors de la première charge de l'assemblage. Un procédé selon l'invention est défini dans les revendications.

Dans un mode de réalisation, le procédé de l'invention peut comporter une étape préalable de formation du film incluant :
a) une étape d'enduction d'un support autre que l'électrode positive avec une composition contenant le sel de lithium,
b) une étape d'extraction du film hors du support.

Alternativement, dans un autre mode de réalisation, l'étape de dépôt du film sur l'électrode positive peut inclure d'enduire directement ladite électrode avec une composition contenant le sel de lithium, en prenant soin de choisir un solvant qui ne modifie pas la surface de l'électrode positive.

En particulier, la composition peut comprendre :
- le sel de lithium ;
- un additif carboné conducteur de l'électricité, tel que du noir de carbone ;
- un liant polymérique, tel qu'un liant à base d'un polymère fluoré comme le polyfluorure de vinylidène ; et
- un solvant organique, par exemple, un solvant polaire aprotique, comme un solvant N-méthyl-2-pyrrolidone (NMP) dans le cas d'un film réalisé au préalable sur un autre support, ou d'acétone par exemple dans le cas d'un film enduit directement sur l'électrode positive.

Le sel de lithium présente avantageusement un anion oxydable avec un cation lithium.

A titre d'exemple de sel de lithium, on peut citer les sels appartenant aux catégories suivantes :
- les azotures de lithium de formules N₃A, avec A correspondant à un cation lithium ;
- les cétocarboxylates de lithium, tels que ceux répondant aux formules (II) à (IV) suivantes : 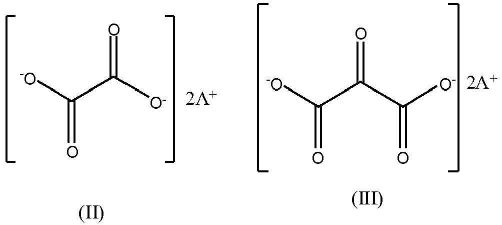 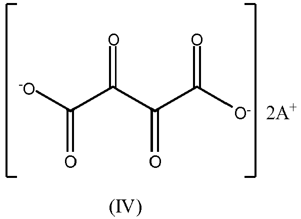 avec A correspondant à un cation lithium ;
- les hydrazides de lithium, tels que ceux répondant aux formules (V) et (VI) suivantes : 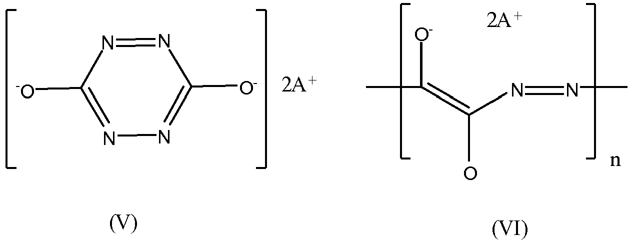 avec A correspondant à un cation lithium et n correspondant au nombre de répétition du motif pris entre crochets, ce nombre de répétition pouvant aller de 3 à 1000.

Avantageusement, il peut s'agir d'un sel de lithium de formule (II), qui correspond à l'oxalate de lithium.

L'électrode positive, sur laquelle est déposé le film de prélithiation, comprend, comme matériau actif, un matériau à base de lithium, lequel matériau remplit la fonction de matériau d'insertion du lithium et ce, de manière réversible pour que les processus de charge et de décharge puissent avoir lieu lors du fonctionnement de l'accumulateur.

En effet, par électrode positive, on précise, classiquement, dans ce qui précède et ce qui suit, qu'il s'agit de l'électrode qui fait office de cathode, quand le générateur débite du courant (c'est-à-dire lorsqu'il est en processus de décharge) et qui fait office d'anode lorsque le générateur est en processus de charge.

Le matériau actif de l'électrode positive peut être un matériau du type oxyde lithié comprenant au moins un élément métallique de transition ou du type phosphate lithié comprenant au moins un élément métallique de transition.

Comme exemples de composés oxydes lithiés comprenant au moins un élément métallique de transition, on peut citer des oxydes simples ou des oxydes mixtes (c'est-à-dire des oxydes comprenant plusieurs éléments métalliques de transition distincts) comprenant au moins un élément métallique de transition, tels que des oxydes comprenant du nickel, du cobalt, du manganèse et/ou de l'aluminium (ces oxydes pouvant être des oxydes mixtes).

Plus spécifiquement, comme oxydes mixtes comprenant du nickel, du cobalt, du manganèse et/ou de l'aluminium, on peut citer les composés de formule (VII) suivante :

LiM²O₂ (VII)

dans laquelle M² est un élément choisi parmi Ni, Co, Mn, Al et les mélanges de ceux-ci.

A titre d'exemples de tels oxydes, on peut citer les oxydes lithiés LiCoO₂, LiNiO₂ et les oxydes mixtes Li(Ni,Co,Mn)O₂ (tel que Li(Ni_{1/3}Mn_{1/3}Co_{1/3})O₂) connu également sous la dénomination NMC), les oxydes dits riches en lithium Li₁₊ₓ(Ni,Co,Mn)O₂, Li(Ni,Co,Al)O₂ (tel que Li(Ni_{0,8}Co_{0,15}Al_{0,05})O₂ connu également sous la dénomination NCA) ou Li(Ni,Co,Mn,Al)O₂.

Comme exemples de composés phosphates lithiés comprenant au moins un élément métallique de transition, on peut citer les composés de formule LiM¹PO₄, où M¹ est choisi parmi Fe, Mn, Co et les mélanges de ceux-ci, tel que LiFePO₄.

Outre la présence d'un matériau actif, tel que ceux définis ci-dessus, l'électrode positive peut comprendre un liant polymérique, tel que du polyfluorure de vinylidène (PVdF), du polyfluorure de vinylidène Hexafluoroprylène (PVdF-HFP), un mélange carboxyméthylcellulose avec un latex du type styrène et/ou butadiène ainsi que un ou plusieurs adjuvants conducteurs de l'électricité, qui peuvent être des matériaux carbonés comme du noir de carbone.

Ainsi, d'un point de vue structural, l'électrode positive peut se présenter sous forme d'un matériau composite comprenant une matrice en liant (s) polymérique(s), au sein de laquelle sont dispersées des charges constituées par le matériau actif et éventuellement le ou adjuvants conducteurs de l'électricité, ledit matériau composite pouvant être déposé sur un collecteur de courant.

Une fois l'électrode positive couverte au moins partiellement par un film à base d'un sel de lithium, elle est assemblée avec une électrode négative et l'électrolyte de sorte à former la cellule électrochimique de l'accumulateur lithium-ion.

On précise que, par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Classiquement, l'électrode négative comprend, comme matériau actif d'électrode, un matériau apte à insérer, de manière réversible, du lithium.

En particulier, le matériau actif d'électrode négative peut être :
- un matériau carboné, tel que du carbone dur (connu sous l'appellation anglo-saxonne « hard carbon »), du graphite naturel ou artificiel ;
- du lithium métallique ou un alliage de lithium, tel qu'un alliage silicium-lithium, un alliage étain-lithium) ; ou
- un oxyde mixte de lithium, tel que Li₄Ti₅O₁₂ ou LiTiO₂.

En outre, au même titre que pour l'électrode positive, notamment lorsqu'elle n'est pas en lithium métallique ou en alliage de lithium, l'électrode négative peut comprendre un liant polymérique, tel que du polyfluorure de vinylidène (PVdF), du polyfluorure de vinylidène Hexafluoroprylène (PVdF-HFP), un mélange carboxyméthylcellulose avec un latex du type styrène et/ou butadiène ainsi que un ou plusieurs adjuvants conducteurs de l'électricité, qui peuvent être des matériaux carbonés, comme du noir de carbone. Qui plus est, au même titre que pour l'électrode positive, l'électrode négative peut se présenter, d'un point de vue structural, comme un matériau composite comprenant une matrice en liant(s) polymérique(s) au sein de laquelle sont dispersées des charges constituées par le matériau actif (se présentant, par exemple, sous forme particulaire) et éventuellement le ou les adjuvants conducteurs de l'électricité.

Ainsi, d'un point de vue structural, l'électrode négative peut se présenter sous forme d'un matériau composite comprenant une matrice en liant(s) polymérique(s), au sein de laquelle sont dispersées des charges constituées par le matériau actif et éventuellement le ou adjuvants conducteurs de l'électricité, ledit matériau composite étant déposé sur un collecteur de courant.

L'électrolyte, disposé entre l'électrode positive et l'électrode négative, est quant à lui un électrolyte conducteur d'ions lithium, et peut être, en particulier :
- un électrolyte liquide comprenant un sel de lithium dissous dans au moins solvant organique, tel qu'un solvant apolaire aprotique ;
- un liquide ionique ; ou
- un électrolyte solide polymère.

A titre d'exemples de sel de lithium, on peut citer LiClO₄, LiAsF₆, LiPF₆, LiBF₄, LiRfSO₃, LiCH₃SO₃, LiN(RfSO₂)₂, Rf étant choisi parmi F ou un groupe perfluoroalkyle comportant de 1 à 8 atomes de carbone, du trifluorométhanesulfonylimide de lithium (connu sous l'abréviation LiTfSI), du bis(oxalato)borate de lithium (connu sous l'abréviation LiBOB), du bis(perfluoréthylsulfonyl)imide de lithium (également connu sous l'abréviation LiBETI), du fluoroalkylphosphate de lithium (connu sous l'abréviation LiFAP).

A titre d'exemples de solvants organiques susceptibles d'entrer dans la constitution de l'électrolyte susmentionné, on peut citer les solvants carbonates, tels que les solvants carbonates cycliques, les solvants carbonates linéaires et les mélanges de ceux-ci.

A titre d'exemples de solvants carbonates cycliques, on peut citer le carbonate d'éthylène (symbolisé par l'abréviation EC), le carbone de propylène (symbolisé par l'abréviation PC), le fluoro carbonate d'éthylene (symbolisé par l'abréviation FEC).

A titre d'exemples de solvants carbonates linéaires, on peut citer le carbonate de diméthyle ou le carbonate de diéthyle (symbolisé par l'abréviation DEC), le carbonate de diméthyle (symbolisé par l'abréviation DMC), le carbonate d'éthylméthyle (symbolisé par l'abréviation EMC).

En outre, l'électrolyte peut être amené à imbiber un élément séparateur, par un élément séparateur polymérique poreux, disposé entre les deux électrodes de l'accumulateur.

L'assemblage ainsi obtenu est ensuite soumis, conformément à l'invention, à une étape de première charge dans des conditions de potentiel nécessaires pour la décomposition du sel de lithium présent dans le film déposé à la surface de l'électrode positive, la décomposition se matérialisant par la libération des ions lithium, lesquels vont participer à la formation de la couche de passivation.

Aussi, d'un point de vue pratique, il s'entend que le sel de lithium présent dans le film doit pouvoir se décomposer à une fenêtre de potentiels que va balayer l'électrode positive lors de la première charge.

Ainsi, lors de la mise en œuvre de la première charge, outre le fait que l'accumulateur se charge, il s'ensuit également une réaction de décomposition du sel de lithium présent dans le film. Lors de cette réaction, le sel de lithium produit, en outre, des ions lithium qui passent dans l'électrolyte et réagissent avec celui-ci pour former la couche de passivation au niveau des particules de matériau actif de l'électrode négative.

En plus de la libération d'ions lithium, la décomposition du sel présent dans le film entraîne la production d'une faible quantité de composés gazeux. Ceux-ci peuvent être solubles dans l'électrolyte et peuvent, si besoin est, être éliminés lors d'une étape de dégazage.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

### BRÈVE DESCRIPTION DES DESSINS

### EXPOSÉ DÉTAILLÉ DE MODES DE RÉALISATION PARTICULIERS

### EXEMPLE 1

Le mélange permettant d'obtenir le film de prélithiation peut être composé de :
- 30% en masse de polyfluorure de vinylidène (PVdF) ;
- 60% en massse d'oxalate de Lithium ;
- 10% en masse de carbone conducteur ;

Le liant PVdF est d'abord introduit dans une solution de solvant NMP jusqu'à sa solvatation totale, de sorte à former un gel. L'oxalate de lithium et le carbone conducteur sont alors introduits au gel NMP/PVdF dans les proportions citées ci-dessus. Une quantité de carbone de propylène (PC) égale à 100% en masse des composants est alors introduite. Le PC sert à promouvoir une grande porosité du film, et ainsi ne pas empêcher l'accès de l'électrolyte liquide à la matière active de l'électrode. De plus, le PC n'altère pas les performances de la batterie, puisque c'est un composant classique de l'électrolyte. Le mélange est ensuite passé dans un mixeur de type Filmix à une vitesse de 8m/s pendant 10s avant d'être enduit sur une plaque de verre afin d'obtenir un film d'épaisseur voulue.

### EXEMPLE 2

Le deuxième exemple consiste à utiliser les mêmes proportions des constituants de l'exemple 1, mais en substituant le mélange PVdF/NMP par du mélange PVdF-HFP/acétone. Ce type de mélange a pour avantage de pouvoir être utilisé non seulement pour réaliser au préalable un film de prélithiation similaire à l'exemple 1, mais aussi pour être enduit directement sur l'électrode positive, ceci sans modifier sa surface, l'acétone n'étant pas un solvant du PVdF utilisé comme liants dans les électrodes.

### EXEMPLE 3

L'additif conducteur et le PVdF peuvent être substitués par un polymère conducteur qui a alors les deux fonctions de liant et d'additif conducteur à la fois.

## Revendications

1. Procédé de préparation d'un accumulateur lithium-ion comprenant une électrode positive et une électrode négative disposées de part et d'autre d'un électrolyte, ladite électrode positive comprenant, comme matériau actif, un matériau à base de lithium, ledit procédé comprenant les étapes suivantes :
a) une étape de dépôt à la surface de l'électrode positive, avant placement dans l'accumulateur, d'un film contenant un sel de lithium ;
b) une étape d'assemblage de l'électrode positive, de l'électrode négative et de l'électrolyte ; et
c) une étape de formation d'une couche de passivation à la surface de l'électrode négative avec les ions lithium issus de la décomposition du sel de lithium contenu dans le film par application d'une première charge à l'assemblage susmentionné,
ledit procédé étant **caractérisé en ce qu'**il comporte une étape préalable incluant :
a) une étape d'enduction d'un support autre que l'électrode positive avec une composition contenant le sel de lithium,
b) une étape d'extraction du film hors du support.

2. Procédé selon la revendication 1, dans lequel la composition comprend :
- le sel de lithium ;
- un additif carboné conducteur de l'électricité ;
- un liant polymérique ; et
- un solvant organique.

3. Procédé selon la revendication 2, dans lequel le solvant organique est l'acétone.

4. Procédé selon l'une quelconque des revendications précédentes, dans lequel le sel de lithium est choisi parmi :
- les azotures de lithium de formule N₃A, avec A correspondant à un cation lithium ;
- les cétocarboxylates de lithium, tels que ceux répondant aux formules (II) à (IV) suivantes : 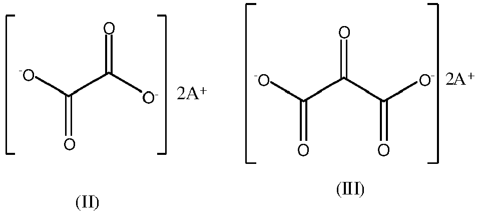 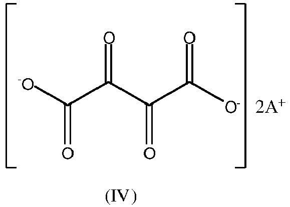 avec A correspondant à un cation lithium ;
- les hydrazides de lithium, tels que ceux répondant aux formules (V) et (VI) suivantes : 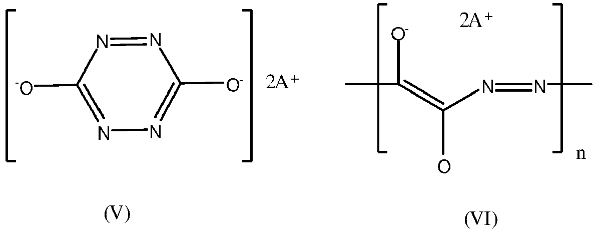 avec A correspondant à un cation lithium et n correspondant au nombre de répétition du motif pris entre crochets, ce nombre de répétition pouvant aller de 3 à 1000.

5. Procédé selon l'une quelconque des revendications précédentes, dans lequel le sel de lithium est le cétocarboxylate de lithium de formule (II), dit également oxalate de lithium.

6. Procédé selon l'une quelconque des revendications précédentes, dans lequel l'électrode positive comprend, comme matériau actif, un matériau du type oxyde lithié ou du type phosphate lithié comprenant au moins un élément métallique de transition.

7. Procédé selon l'une quelconque des revendications précédentes, dans lequel l'électrode positive comprend, comme matériau actif, du LiFePO₄.

8. Procédé selon l'une quelconque des revendications 1 à 7, dans lequel l'électrode négative comprend, comme matériau actif :
- un matériau carboné, tel que du carbone dur (connu sous l'appellation anglo-saxonne « hard carbon »), du graphite ;
- du lithium métallique ou un alliage de lithium, tel qu'un alliage silicium-lithium, un alliage étain-lithium) ; ou
- un oxyde mixte de lithium, tel que Li₄Ti₅O₁₂ ou LiTiO₂.

9. Procédé selon l'une quelconque des revendications précédentes, dans lequel l'électrode négative comprend, comme matériau actif, du graphite.

## Patentansprüche

1. Verfahren zur Herstellung eines Lithium-Ionen-Akkumulators, umfassend eine positive Elektrode und eine negative Elektrode, die auf beiden Seiten eines Elektrolyts angeordnet sind, wobei die positive Elektrode als Aktivmaterial ein Material auf Basis von Lithium umfasst, wobei das Verfahren die folgenden Schritte umfasst:
a) einen Schritt der Abscheidung eines Films, der ein Lithiumsalz enthält, auf der Oberfläche der positiven Elektrode vor der Anordnung in dem Akkumulator;
b) einen Schritt des Zusammenbaus der positiven Elektrode, der negativen Elektrode und des Elektrolyts und
c) einen Schritt der Bildung einer Passivierungsschicht auf der Oberfläche der negativen Elektrode mit den sich aus der Zersetzung des in dem Film enthaltenen Lithiumsalzes ergebenden Lithiumionen durch Anlegen einer ersten Ladung an die oben erwähnte zusammengebaute Anordnung,
wobei das Verfahren **dadurch gekennzeichnet ist, dass** es einen vorgeschalteten Schritt umfasst, der Folgendes einschließt:
a) einen Schritt der Beschichtung eines Trägers, der von der positiven Elektrode verschieden ist, mit einer Zusammensetzung, die das Lithiumsalz enthält,
b) einen Schritt des Abziehens des Films von dem Träger.

2. Verfahren nach Anspruch 1, wobei die Zusammensetzung Folgendes umfasst:
- das Lithiumsalz;
- ein elektrisch leitendes Kohlenstoffadditiv;
- ein polymeres Bindemittel und
- ein organisches Lösungsmittel.

3. Verfahren nach Anspruch 2, wobei es sich bei dem organischen Lösungsmittel um Aceton handelt.

4. Verfahren nach einem der vorhergehenden Ansprüche, wobei das Lithiumsalz ausgewählt ist aus:
- Lithiumaziden der Formel N₃A, wobei A einem Lithiumkation entspricht;
- Lithiumketocarboxylaten wie denjenigen, die den folgenden Formeln (II) bis (IV) entsprechen: 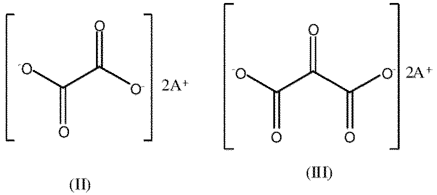 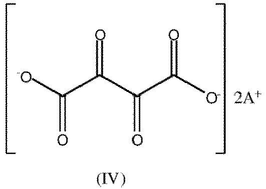 wobei A einem Lithiumkation entspricht;
- Lithiumhydraziden wie denjenigen, die den folgenden Formeln (V) und (VI) entsprechen: 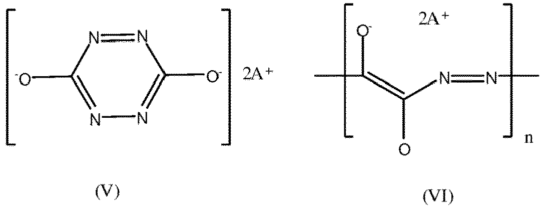 wobei A einem Lithiumkation entspricht und n der Zahl von Wiederholungen der Einheit in den Klammern entspricht, wobei diese Zahl von Wiederholungen im Bereich von 3 bis 1000 liegen kann.

5. Verfahren nach einem der vorhergehenden Ansprüche, wobei es sich bei dem Lithiumsalz um ein Lithiumketocarboxylat der Formel (II), das auch als Lithiumoxalat bezeichnet wird, handelt.

6. Verfahren nach einem der vorhergehenden Ansprüche, wobei die positive Elektrode als Aktivmaterial ein Material vom Typ lithiiertes Oxid oder vom Typ lithiiertes Phosphat, das mindestens ein Übergangsmetallelement umfasst, umfasst.

7. Verfahren nach einem der vorhergehenden Ansprüche, wobei die positive Elektrode als Aktivmaterial LiFePO₄ umfasst.

8. Verfahren nach einem der Ansprüche 1 bis 7, wobei die negative Elektrode als Aktivmaterial Folgendes umfasst:
- ein Kohlenstoffmaterial wie Hard Carbon oder Graphit;
- Lithiummetall oder eine Lithiumlegierung wie eine Silicium-Lithium-Legierung, eine Zinn-Lithium-Legierung oder
- ein Lithiummischoxid wie Li₄Ti₅O₁₂ oder LiTiO₂.

9. Verfahren nach einem der vorhergehenden Ansprüche, wobei die negative Elektrode als Aktivmaterial Graphit umfasst.

## Claims

1. Process for preparing a lithium-ion battery comprising a positive electrode and a negative electrode positioned on either side of an electrolyte, said positive electrode comprising, as active material, a lithium-based material, said process comprising the following steps:
a) a step of depositing on the surface of the positive electrode, before placement in the battery, a film containing a lithium salt;
b) a step of assembling the positive electrode, the negative electrode and the electrolyte; and
c) a step of forming a passivation layer on the surface of the negative electrode with the lithium ions resulting from the decomposition of the lithium salt contained in the film by application of a first charge to the abovementioned assembly,
the process being **characterized in that** it comprises a prior step that includes:
a) a step of coating a support other than the positive electrode with a composition containing the lithium salt,
b) a step of removing the film from the support.

2. Process according to Claim 1, in which the composition comprises:
- the lithium salt;
- an electrically conductive carbon-based additive;
- a polymeric binder; and
- an organic solvent.

3. Process according to Claim 2, in which the organic solvent is acetone.

4. Process according to any one of the preceding claims, in which the lithium salt is selected from:
- lithium azides of formula N₃A, with A corresponding to a lithium cation;
- lithium ketocarboxylates, such as those corresponding to the following formulae (II) to (IV): 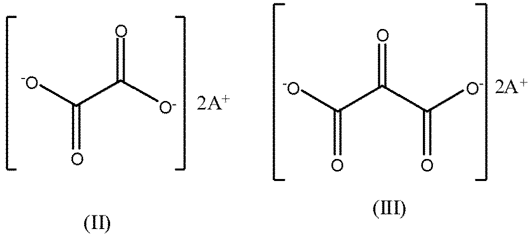 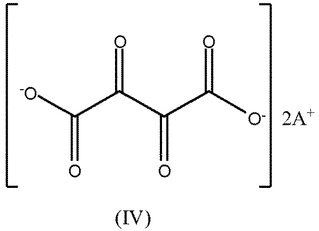 with A corresponding to a lithium cation;
- lithium hydrazides such as those corresponding to the following formulae (V) and (VI): 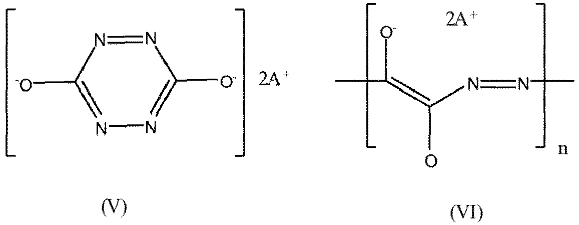 with A corresponding to a lithium cation and n corresponding to the repeat number of the unit between brackets, this repeat number possibly ranging from 3 to 1000.

5. Process according to any one of the preceding claims, in which the lithium salt is the lithium ketocarboxylate of formula (II), also referred to as lithium oxalate.

6. Process according to any one of the preceding claims, in which the positive electrode comprises, as active material, a material of lithiated oxide type or of lithiated phosphate type comprising at least one transition metal element.

7. Process according to any one of the preceding claims, in which the positive electrode comprises, as active material, LiFePO₄.

8. Process according to any one of Claims 1 to 7, in which the negative electrode comprises, as active material:
- a carbon-based material, such as hard carbon, graphite;
- lithium metal or a lithium alloy, such as a silicon-lithium alloy, a tin-lithium alloy; or
- a mixed lithium oxide, such as Li₄Ti₅O₁₂ or LiTiO₂.

9. Process according to claimed in any one of the preceding claims, in which the negative electrode comprises, as active material, graphite.
